# EUROPEAN PATENT APPLICATION

(11) **EP 4 446 985 A1**
(43) Date of publication of application: **16.10.2024**
(21) Application number: 23742751.3
(22) Date of filing: 10.01.2023
(51) Int. Cl.: G06T 7/246

(54) **VIDEO PROCESSING METHOD, VIDEO PLAYING METHOD AND RELATED APPARATUS**

(30) Priority: 19.01.2022 CN 202210059701
(71) Applicant: Huawei Technologies Co., Ltd., Shenzhen, Guangdong 518129 (CN)
(72) Inventor: ZHANG, Lina, Shenzhen, Guangdong 518129 (CN); YUE, Zhonggang, Shenzhen, Guangdong 518129 (CN); QU, Xiaogang, Shenzhen, Guangdong 518129 (CN); ZHANG, Chenguang, Shenzhen, Guangdong 518129 (CN)
(74) Representative: Pfenning, Meinig & Partner mbB
(86) International application number: PCT/CN2023/071497
(87) International publication number: WO 2023/138436

(57) **Abstract**

This application discloses a video processing method, a video playing method, and a related apparatus, and pertains to the field of video processing technologies. The method includes: obtaining first bitstream data of a target video image, where the target video image is a frame of video image in a target video, the target video is obtained by capturing a target scene, and the target scene includes one or more moving objects; determining skeleton data of a target object in the target video image based on the first bitstream data, where the target object is one of the one or more moving objects; and encapsulating the first bitstream data of the target video image and the skeleton data of the target object in the target video image, to obtain second bitstream data of the target video image. In this application, the first bitstream data of the target video image and the skeleton data of the target object in the target video image are encapsulated together, to help analyze a motion status of the target object.

## Description

This application claims priority to Chinese Patent Application No. 202210059701.7, filed with the China National Intellectual Property Administration on January 19, 2022 and entitled "VIDEO PROCESSING METHOD, VIDEO PLAYING METHOD, AND RELATED APPARATUS", which is incorporated herein by reference in its entirety.

### TECHNICAL FIELD

This application relates to the field of video processing technologies, and in particular, to a video processing method, a video playing method, and a related apparatus.

### BACKGROUND

Currently, for a sport scene, for example, speed skating, basketball, football, volleyball, or badminton, videos are usually recorded when an athlete is training and playing a game, so that a coach can analyze motion data of the athlete, to formulate a training plan for the individual athlete. However, accuracy of analysis in this manner is low, and consequently, a finalized training plan is not well targeted.

### SUMMARY

This application provides a video processing method, a video playing method, and a related apparatus, to improve analysis accuracy. The technical solutions are as follows.

According to a first aspect, a video processing method is provided. The method includes: obtaining first bitstream data of a target video image, where the target video image is a frame of video image in a target video, the target video is obtained by capturing a target scene, and the target scene includes one or more moving objects; determining skeleton data of a target object in the target video image based on the first bitstream data, where the target object is one of the one or more moving objects; and encapsulating the first bitstream data of the target video image and the skeleton data of the target object in the target video image, to obtain second bitstream data of the target video image.

The skeleton data of the target object in the target video image is determined, so that the skeleton data of the target object in the target video image and the first bitstream data of the target video image are encapsulated together. This ensures synchronization between the first bitstream data and the skeleton data obtained through analysis, and improves flexibility, real-time performance, and correlation of data processing, thereby helping analyze a motion status of the target object and improving analysis accuracy. In addition, in a scene of athlete training, a finalized training plan can be more targeted.

In some embodiments, a plurality of cameras are deployed in the target scene, and the target video is a video obtained by any one of the plurality of cameras by capturing the target scene; or the target video is a video corresponding to the target object, and the video corresponding to the target object is obtained through video synthesis performed on videos captured by the plurality of cameras, and is used to record a moving process of the target object in the target scene. In addition, the plurality of cameras may correspond to a plurality of different angles of view. In other words, the plurality of cameras may photograph the target scene from the plurality of angles of view.

When the target video is a synthesized video of the target object, an entire moving process of the target object in the target scene can be analyzed by using the foregoing method. This helps perform more comprehensive analysis on the motion status of the target object.

A camera may send a captured video to a video analysis device, or may send a video stream to a video analysis device after encoding and compressing a captured video. The target video is used as an example. When the camera sends the captured target video to the video analysis device, the video analysis device may encode and compress the target video image in the target video, to obtain the first bitstream data of the target video image. When the camera sends the captured target video stream to the video analysis device, the video analysis device may directly obtain the first bitstream data of target video image from the target video stream. The following uses an example in which the camera sends the target video stream to the video analysis device for description.

The target scene may be a scene of athlete training or a game scene, or may be an emergency escape command scene, a tourism scene, an animal protection scene, or the like. When target scenes are different, moving objects in the target scenes are different. For example, when the target scene is the scene of athlete training or the game scene, the moving object may be the athlete. When the target scene is the emergency escape command scene, the moving object may be a person who needs to escape. When the target scene is the tourism scene, the moving object may be a tourist. When the target scene is the animal protection scene, the moving object may be an animal. This application may be further applied to another scene. In this case, the moving object varies with the scene. Details are not described herein.

Optionally, the skeleton data includes imaging coordinates of a skeleton point. The imaging coordinates are coordinates of the skeleton point in the target video image. In this case, an implementation process in which the video analysis device determines the skeleton data of the target object in the target video image based on the first bitstream data of the target video image includes: parsing the first bitstream data of the target video image, to obtain the target video image; detecting the target object in the target video image, to determine an imaging area of the target object; and determining the imaging coordinates of the skeleton point of the target object based on the imaging area of the target object.

The imaging coordinates of the skeleton point of the target object are determined. This can ensure that after the target video image is subsequently displayed, the skeleton point of the target object and a location of the target object can be quickly determined based on the imaging coordinates of the skeleton point of the target object. In this way, a mark box of the target object can be quickly displayed on a playing interface.

In an example, after determining the imaging area of the target object, the video analysis device may perform skeleton analysis on the imaging area of the target object, to determine the imaging coordinates of the skeleton point of the target object.

Optionally, in addition to the imaging coordinates of the skeleton point, the skeleton data may further include coordinates of the skeleton point in a world coordinate system. In this case, after determining the imaging coordinates of the skeleton point of the target object based on the foregoing process, the video analysis device may further convert the imaging coordinates of the skeleton point of the target object to the world coordinate system, to obtain the coordinates of the skeleton point of the target object in the world coordinate system.

In a process of analyzing the motion status of the target object, motion data such as a motion track, an instantaneous speed, and a displacement during motion of the target object usually needs to be determined, to analyze the motion status of the target object based on the motion data. However, the motion data usually needs to be determined based on data in the world coordinate system. Therefore, the coordinates of the skeleton point of the target object in the world coordinate system are determined, and then the coordinates are encapsulated together with the motion data. This can improve a speed and accuracy of analysis on the motion status of the target object.

In this application, all the cameras are rigidly deployed in the target scene, and a camera parameter of each camera is preset. In a photographing process, a photographing area and a photographing focus of each camera are constant, and therefore an image coordinate system of each camera is constant. In addition, after the camera is deployed, the camera may be further calibrated, to determine a transformation relationship between the image coordinate system of the camera and the world coordinate system. In this way, after the imaging coordinates of the skeleton point of the target object are determined, the imaging coordinates may be converted, based on the transformation relationship between the image coordinate system of the camera that is used to photograph the target video and the world coordinate system, from the image coordinate system of the camera to the world coordinate system, to obtain the coordinates of the skeleton point of the target object in the world coordinate system.

It should be noted that the skeleton data may alternatively include only the imaging coordinates of the skeleton point, or include only the coordinates of the skeleton point in the world coordinate system. In addition, the skeleton data may further include other data. This is not limited in this application. In addition, the target object may be one or more moving objects in general.

Optionally, after encapsulating the first bitstream data of the target video image and the skeleton data of the target object in the target video image, to obtain the second bitstream data of the target video image, the video analysis device may further generate media description information. The media description information includes description information of the first bitstream data and description information of the skeleton data of the target object.

The video analysis device may not only encapsulate the first bitstream data of the target video image and the skeleton data of the target object in the target video image together, but also encapsulate other data together with the first bitstream data of the target video image and the skeleton data of the target object in the target video image, such as audio data and motion data.

In an example, the video analysis device may further obtain target audio data corresponding to the target video image, and encapsulate the first bitstream data of the target video image, the skeleton data of the target object in the target video image, and the target audio data, to obtain the second bitstream data of the target video image. In other words, the video analysis device encapsulates the first bitstream data of the target video image, the skeleton data of the target object in the target video image, and the target audio data together.

In another example, the video analysis device may further determine motion data corresponding to the target video image. The motion data is used to describe the motion status of the target object in the target scene obtained when the target video image is captured. Then, the video analysis device encapsulates the first bitstream data of the target video image, the skeleton data of the target object in the target video image, and the motion data corresponding to the target video image, to obtain the second bitstream data of the target video image. In other words, the video analysis device encapsulates the first bitstream data of the target video image, the skeleton data of the target object in the target video image, and the motion data corresponding to the target video image together.

In addition to encapsulating the first bitstream data of the target video image and the skeleton data of the target object, the video analysis device may further encapsulate the motion data of the target object together with the first bitstream data of the target video image and the skeleton data of the target object. In this way, when the target video image is displayed, the motion data of the target object may be directly displayed, and the motion data of the target object does not need to be determined through various operations. This improves display efficiency.

The motion data corresponding to the target video image includes an instantaneous speed, a motion track, a displacement during motion, an average speed, a quantity of steps, and the like. When the motion data includes the instantaneous speed, the instantaneous speed is used to describe a speed of the target object in the target scene obtained at a moment when the target video image is captured. When the motion data includes the motion track, the motion track is used to describe a track in a moving process of the target object in the target scene obtained when the target video image is captured. When the motion data includes the displacement during motion, the displacement during motion is used to describe a displacement in a moving process of the target object in the target scene obtained when the target video image is captured. When the motion data includes the average speed, the average speed is used to describe an average speed in a moving process of the target object in the target scene obtained when the target video image is captured. When the motion data includes the quantity of steps, the quantity of steps is used to describe a quantity of steps in a moving process of the target object in the target scene obtained when the target video image is captured. In other words, the instantaneous speed is used to describe a motion status of the target object in the target scene obtained at the moment when the target video image is captured, and the motion track, the displacement during motion, the average speed, and the quantity of steps are used to describe a motion status of the target object in the target scene obtained from a moment when the target video is started to be captured to the moment when the target video image is captured.

When the motion data includes the instantaneous speed, an implementation process in which the video analysis device determines the motion data of the target object in the target scene includes: determining the instantaneous speed of the target object based on coordinates of a key skeleton point of the target object in the target video image in the world coordinate system, and coordinates of the key skeleton point of the target object in one or more adjacent frames of video image that are in a target video stream and that are located before the target video image in the world coordinate system.

An error of an instantaneous speed determined by using the target video image and an adjacent frame of video image before the target video image is usually large. Therefore, in this application, the instantaneous speed of the target object can be determined by using a plurality of adjacent frames of video image before the target video image, to reduce an error of a determined instantaneous speed and improve accuracy of the instantaneous speed.

When the motion data includes the motion track, an implementation process in which the video analysis device determines the motion data of the target object in the target scene includes: generating the motion track of the target object based on horizontal coordinates of a key skeleton point of the target object in the target video image in the world coordinate system. In other words, the video analysis device generates a motion track each time a frame of video image is analyzed. In this way, based on a motion track generated when a previous frame of video image of the target video image is analyzed, the video analysis device may add a track between the previous frame of video image and the target video image based on the horizontal coordinates of the key skeleton point of the target object in the target video image in the world coordinate system, to obtain the motion track of the target object in the target scene at a moment when the target video image is captured. In other words, when the target video image is captured, the motion track of the target object in the target scene is determined based on the target video image and the horizontal coordinates, in the world coordinate system, of the key skeleton point of the target object in the video image before the target video image. The key skeleton point may be one skeleton point.

When the video analysis device further encapsulates the target audio data and the motion data corresponding to the target video image together with the first bitstream data of the target video image and the skeleton data of the target object in the target video image, the media description information generated by the video analysis device not only includes description information of the first bitstream data of the target video image and description information of the skeleton data of the target object, but also may include description information of the target audio data, description information of the motion data, and the like.

In embodiments of this application, the video analysis device may encapsulate the foregoing data in an encapsulation format, for example, dash or hls. Certainly, another encapsulation format may be alternatively used. This is not limited in this application. When the foregoing data is encapsulated in the dash or his encapsulation format, the second bitstream data of the target video image is written into a data fragment. In addition, one data fragment may include a plurality of frames of data. For example, the data fragment includes 25 frames of data or 32 frames of data. This is not limited in this application.

According to a second aspect, a video playing method is provided. The method includes: obtaining second bitstream data of a target video image, where the second bitstream data includes first bitstream data of the target video image and skeleton data of a target object in the target video image; parsing, by a terminal device, the second bitstream data of the target video image to obtain the first bitstream data of the target video image and the skeleton data of the target object in the target video image; and displaying the target video image on a playing interface based on the first bitstream data of the target video image, and displaying a mark box of the target object on the playing interface based on the skeleton data of the target object in the target video image.

A video analysis device encapsulates the skeleton data of the target object in the target video image together with the first bitstream data of the target video image. In this way, when the target video image is displayed, the mark box of the target object may also be displayed on the playing interface based on the skeleton data of the target object in the target video image. In other words, when the target video image is displayed, the target object may also be marked on the playing interface in real time, to help analyze a motion status of the target object and improve analysis accuracy. In addition, in a scene of athlete training, a finalized training plan can be more targeted.

Based on the foregoing description, the skeleton data of the target object may include imaging coordinates of a skeleton point of the target object, or may include coordinates of a skeleton point of the target object in a world coordinate system. When the skeleton data of the target object includes the imaging coordinates of the skeleton point of the target object, an imaging area of the target object in the target video image may be determined based on the imaging coordinates of the skeleton point of the target object, to display the mark box of the target object. When the skeleton data of the target object includes the coordinates of the skeleton point of the target object in the world coordinate system, the coordinates of the skeleton point of the target object in the world coordinate system may be converted into imaging coordinates, and an imaging area of the target object in the target video image is determined based on the imaging coordinates of the skeleton point of the target object, to display the mark box of the target object.

When the second bitstream data of the target video image further includes target audio data corresponding to the target video image, the terminal device may further obtain the target audio data by parsing the second bitstream data. When the target video image and the mark box of the target object are displayed on the playing interface, the target audio data may also be played.

When the second bitstream data of the target video image further includes motion data corresponding to the target video image, the motion data corresponding to the target video image may be further obtained by parsing the second bitstream data. When the target video image and the mark box of the target object are displayed on the playing interface, the motion data may also be displayed on the playing interface.

When the second bitstream data of the target video image does not include motion data corresponding to the target video image, the motion data corresponding to the target video image is determined based on the skeleton data of the target object in the target video image. When the target video image and the mark box of the target object are displayed on the playing interface, the motion data may also be displayed on the playing interface.

When the target video image and the mark box of the target object are displayed, the motion data of the target object is displayed, including but not limited to a motion track of the target object, a quantity of steps of the target object, a displacement of the target object, a motion speed of the target object, or the like. In other words, when displaying the target video image, the terminal device may also display a real-time motion analysis result of the target object on a playing picture in a superimposed manner, for example, display a real-time motion track, a real-time quantity of steps, a real-time displacement, a real-time speed, and the like of the target object on the playing picture in the superimposed manner, so that an original video image is synchronized with the skeleton data, the motion data, and the like that are obtained through analysis. This increases flexibility, real-time performance, and correlation of data processing, thereby facilitating analysis on motion of the target object.

According to a third aspect, a video processing apparatus is provided. The video processing apparatus has a function of implementing behavior of the video processing method according to the first aspect. The video processing apparatus includes at least one module. The at least one module is configured to implement the video processing method provided in the first aspect.

According to a fourth aspect, a video playing apparatus is provided. The video processing apparatus has a function of implementing behavior of the video playing method according to the second aspect. The video playing apparatus includes at least one module. The at least one module is configured to implement the video playing method provided in the second aspect.

According to a fifth aspect, a video analysis device is provided. The video analysis device includes a processor and a memory. The memory is configured to store a computer program for performing the video processing method provided in the first aspect. The processor is configured to execute the computer program stored in the memory, to implement the video processing method according to the first aspect.

Optionally, the video analysis device may further include a communication bus. The communication bus is configured to establish a connection between the processor and the memory.

According to a sixth aspect, a video playing device is provided. The video playing device includes a processor and a memory. The memory is configured to store a computer program for performing the video playing method provided in the first aspect. The processor is configured to execute the computer program stored in the memory, to implement the video playing method according to the first aspect.

Optionally, the video playing device may further include a communication bus. The communication bus is configured to establish a connection between the processor and the memory. The video playing device may be a terminal device, or may be a management device having a display function.

According to a seventh aspect, a computer-readable storage medium is provided. The storage medium stores instructions. When the instructions are run on a computer, the computer is enabled to perform the steps of the video processing method according to the first aspect, or perform the steps of the video playing method according to the second aspect.

According to an eighth aspect, a computer program product including instructions is provided. When the instructions are run on a computer, the computer is enabled to perform the steps of the video processing method according to the first aspect, or perform the steps of the video playing method according to the second aspect.

In other words, a computer program is provided. When the computer program is run on a computer, the computer is enabled to perform the steps of the video processing method according to the first aspect, or perform the steps of the video playing method according to the second aspect.

Technical effects obtained in the third aspect to the eighth aspect are similar to the technical effects obtained by using corresponding technical means in the first aspect or the second aspect. Details are not described herein again.

The technical solutions provided in this application can bring at least the following beneficial effects:

The skeleton data of the target object in the target video image can be determined by analyzing the target video image, so that the skeleton data of the target object in the target video image and the first bitstream data of the target video image are encapsulated together. In this way, when the target video image is displayed, the mark box of the target object may also be displayed on the playing interface based on the skeleton data of the target object in the target video image. In other words, the first bitstream data of the target video image and the skeleton data obtained through analysis are encapsulated together. This ensures synchronization between the first bitstream data and the skeleton data obtained through analysis, and improves flexibility, real-time performance, and correlation of data processing, thereby helping analyze the motion status of the target object and improving analysis accuracy. In addition, in the scene of athlete training, the finalized training plan can be more targeted.

### BRIEF DESCRIPTION OF DRAWINGS

FIG. 1 is a diagram of a structure of a video processing system according to an embodiment of this application;
FIG. 2 is a diagram of camera distribution locations according to an embodiment of this application;
FIG. 3 is a diagram of a structure of another video processing system according to an embodiment of this application;
FIG. 4 is a schematic flowchart of a video processing method according to an embodiment of this application;
FIG. 5 is a diagram of distribution of human skeleton points according to an embodiment of this application;
FIG. 6 is a diagram of a motion track of a target object according to an embodiment of this application;
FIG. 7 is a diagram of a playing interface according to an embodiment of this application;
FIG. 8 is a diagram of another playing interface according to an embodiment of this application;
FIG. 9 is a diagram of a structure of a video processing apparatus according to an embodiment of this application;
FIG. 10 is a diagram of a structure of a video playing apparatus according to an embodiment of this application;
FIG. 11 is a diagram of a structure of a computer device according to an embodiment of this application; and
FIG. 12 is a diagram of a structure of a terminal device according to an embodiment of this application.

### DESCRIPTION OF EMBODIMENTS

To make the objectives, technical solutions, and advantages of this application clearer, the following further describes implementations of this application in detail with reference to the accompanying drawings.

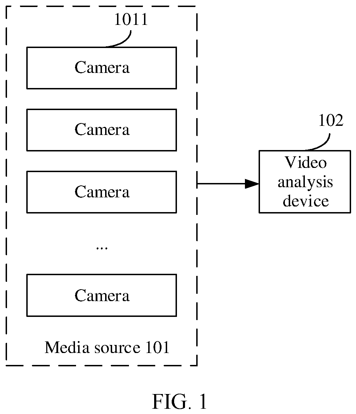

FIG. 1 is a diagram of a structure of a video processing system according to an embodiment of this application. With reference to FIG. 1, the video processing system includes a media source 101 and a video analysis device 102. The media source 101 is in a communication connection to the video analysis device 102, and the communication connection is a wired connection or a wireless connection.

The media source 101 is configured to provide one or more video streams. In FIG. 1, the media source 101 includes one or more cameras 1011. The one or more cameras 1011 are deployed in a target scene. Each camera 1011 is configured to capture the target scene to obtain a video stream. A quantity of cameras in FIG. 1 is merely used as an example for description, and is not used as a limitation on the video processing system provided in embodiments of this application. The target scene may be a scene of athlete training or a game scene, or may be an emergency escape command scene, a tourism scene, an animal protection scene, or the like. The target scene is not limited in embodiments of this application.

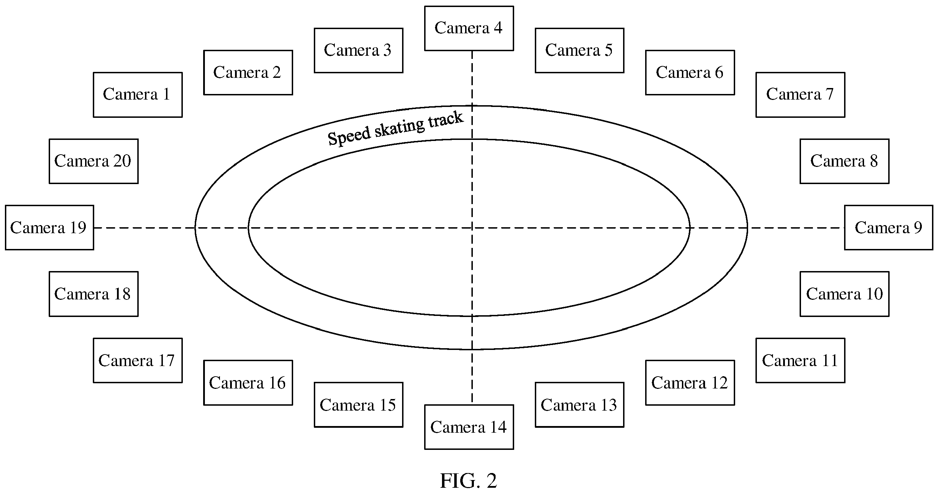

When a plurality of cameras 1011 are deployed in the target scene, the plurality of cameras 1011 may be arranged in an annulus arrangement manner, a circular sector arrangement manner, a straight line arrangement manner, another irregular arrangement manner, or the like. A corresponding camera arrangement manner may be designed based on an actual deployment scenario. For example, if the plurality of cameras 1011 are configured to capture motion videos of an athlete on an annular speed skating track, the plurality of cameras 1011 may be deployed around the speed skating track in the annular arrangement manner. FIG. 2 is a diagram of camera distribution locations according to an embodiment of this application. As shown in FIG. 2, 20 cameras are deployed near a speed skating track and are denoted as cameras 1 to 20. The 20 cameras are arranged in an annular manner, and photographing directions of the 20 cameras all face the speed skating track. Optionally, photographing areas of the 20 cameras may completely cover the entire speed skating track. In other words, when an athlete moves on the speed skating track, at each capture moment, there is always at least one camera in the 20 cameras that can capture a video image including an image of the athlete.

The video analysis device 102 is configured to: receive a video stream from each camera 1011 in the media source 101, determine skeleton data of a target object in each frame of video image based on first bitstream data of each frame of video image in each video stream, and encapsulate the first bitstream data of each frame of video image and the skeleton data of the target object in each frame of video image, to obtain second bitstream data of each frame of video image. In other words, for any frame of video image, the skeleton data of the target object in the video image is determined based on the first bitstream data of the video image, and the first bitstream data of the video image and the skeleton data of the target object in the video image are encapsulated together, to obtain the second bitstream data of the video image.

The foregoing is described by using an example in which each camera 1011 in the media source 101 obtains a video stream by capturing the target scene, and sends the video stream to the video analysis device 102, and the video analysis device 102 processes the video stream. In other words, each camera 1011 in the media source 101 obtains a video by capturing the target video, obtains a video stream by encoding and compressing the video, and sends the video stream to the video analysis device 102. The video analysis device 102 processes the video stream. Certainly, each camera 1011 in the media source 101 may alternatively obtain a video by capturing the target scene, and directly send the video to the video analysis device 102, without encoding and compressing the video. The video analysis device 102 obtains the first bitstream data of each frame of video image, and performs a subsequent processing process.

In some embodiments, the video analysis device 102 may not only process a video stream from each camera 1011, but also perform video synthesis on a plurality of video streams from the plurality of cameras 1011, to obtain a video stream corresponding to the target object, so as to process the video stream corresponding to the target object. In other words, after receiving the plurality of video streams from the plurality of cameras 1011, the video analysis device 102 extracts video images including an image of the target object from the plurality of video streams, to obtain, through synthesis, the video stream corresponding to the target object, so as to process the video stream that corresponds to the target object and that is obtained through synthesis. Each frame of video image in the video stream that corresponds to the target object and that is obtained through synthesis includes an image of the target object, and the video stream may also be referred to as a synthesized video stream corresponding to the target object.

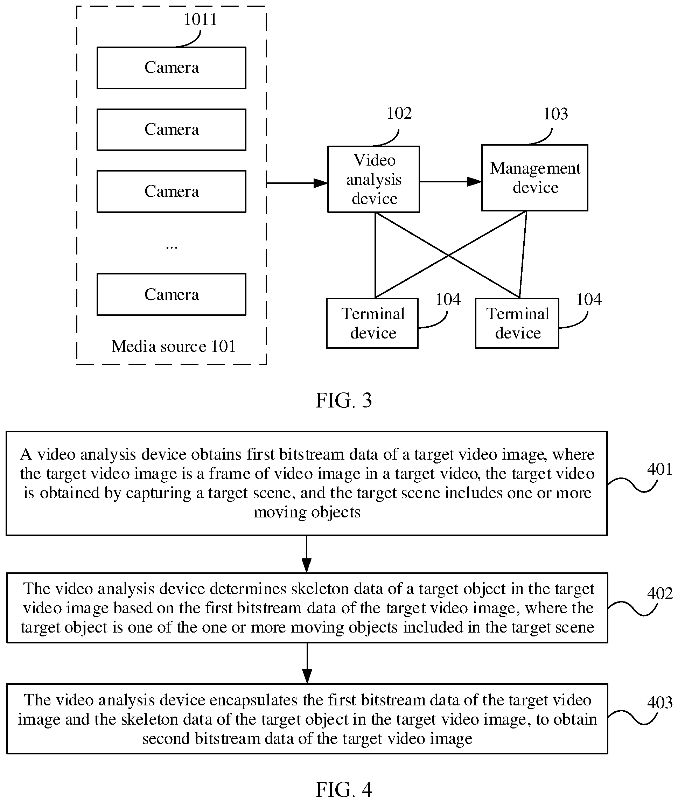

In some embodiments, with reference to FIG. 3, the video processing system may further include a management device 103. The management device 103 may be a third-party device. After encapsulating the first bitstream data of each frame of video image in each video stream and the skeleton data of the target object in each frame of video image together, the video analysis device 102 may send a bitstream obtained through encapsulation to the management device 103. Optionally, in FIG. 3, the video processing system may further include a plurality of terminal devices 104. Each terminal 104 may obtain, from the video analysis device 102, the bitstream obtained through encapsulation, and parse the bitstream to display each frame of video image and the skeleton data of the target object in each video image. Alternatively, each terminal device 104 may obtain, from the management device 103, the bitstream obtained through encapsulation, and parse the bitstream to display each frame of video image and the skeleton data of the target object in each video image.

The camera 1011 may be a camera of any type, for example, a monocular camera, a binocular camera, or a multi-ocular camera.

The video analysis device 102 and the management device 103 may be independent servers, or may be server clusters or distributed systems including a plurality of physical servers, or may be cloud servers that provide basic cloud computing services such as a cloud service, a cloud database, cloud computing, a cloud function, cloud storage, a network service, cloud communication, a middleware service, a domain name service, a security service, a content delivery network (content delivery network, CDN), big data, and an artificial intelligence platform, or may be cloud computing service centers.

The terminal device 104 may be an electronic product of any type that can perform human-computer interaction with a user by using one or more of the following: a keyboard, a touchpad, a touchscreen, a remote control, a voice interaction device, or a handwriting device, for example, may be a personal computer (personal computer, PC), a mobile phone, a smartphone, a personal digital assistant (personal digital assistant, PDA), a pocket personal computer PPC (pocket PC), or a tablet computer.

A person skilled in the art should understand that the camera 1011, the video analysis device 102, the management device 103, and the terminal device 104 are merely examples. If another existing device or a device that may appear in the future is applicable to embodiments of this application, the device should also fall within the protection scope of embodiments of this application, and be included herein by reference.

It should be noted that a system architecture described in embodiments of this application is intended to describe the technical solutions in embodiments of this application more clearly, and does not constitute any limitation on the technical solutions provided in embodiments of this application. A person of ordinary skill in the art may learn that, with evolution of the system architecture, the technical solutions provided in embodiments of this application are also applicable to similar technical problems.

FIG. 4 is a schematic flowchart of a video processing method according to an embodiment of this application. The method includes the following several steps.

Step 401: A video analysis device obtains first bitstream data of a target video image, where the target video image is a frame of video image in a target video, the target video is obtained by capturing a target scene, and the target scene includes one or more moving objects.

In some embodiments, a plurality of cameras are deployed in the target scene, and the target video is a video obtained by any one of the plurality of cameras by capturing the target scene; or the target video is a video corresponding to a target object, and the video corresponding to the target object is obtained through video synthesis performed on videos captured by the plurality of cameras, and is used to record a moving process of the target object in the target scene. In addition, the plurality of cameras may correspond to a plurality of different angles of view. In other words, the plurality of cameras may photograph the target scene from the plurality of angles of view.

Based on the foregoing description, a camera may send a captured video to the video analysis device, or may send a video stream to the video analysis device after encoding and compressing a captured video. The target video is used as an example. When the camera sends the captured target video to the video analysis device, the video analysis device may encode and compress the target video image in the target video, to obtain the first bitstream data of the target video image. When the camera sends a captured target video stream to the video analysis device, the video analysis device may directly obtain the first bitstream data of target video image from the target video stream. The following uses an example in which the camera sends the target video stream to the video analysis device for description.

Based on the foregoing description, the target scene may be a scene of athlete training or a game scene, or may be an emergency escape command scene, a tourism scene, an animal protection scene, or the like. When target scenes are different, moving objects in the target scenes are different. For example, when the target scene is the scene of athlete training or the game scene, the moving object may be the athlete. When the target scene is the emergency escape command scene, the moving object may be a person who needs to escape. When the target scene is the tourism scene, the moving object may be a tourist. When the target scene is the animal protection scene, the moving object may be an animal. Embodiments of this application may be further applied to another scene. In this case, the moving object varies with the scene. Details are not described herein.

Step 402: The video analysis device determines skeleton data of the target object in the target video image based on the first bitstream data of the target video image, where the target object is one of the one or more moving objects included in the target scene.

In some embodiments, the skeleton data includes imaging coordinates of a skeleton point. The imaging coordinates are coordinates of the skeleton point in the target video image. In this case, an implementation process in which the video analysis device determines the skeleton data of the target object in the target video image based on the first bitstream data of the target video image includes: parsing the first bitstream data of the target video image, to obtain the target video image; detecting the target object in the target video image, to determine an imaging area of the target object; and determining the imaging coordinates of the skeleton point of the target object based on the imaging area of the target object.

In an example, after determining the imaging area of the target object, the video analysis device may perform skeleton analysis on the imaging area of the target object, to determine the imaging coordinates of the skeleton point of the target object.

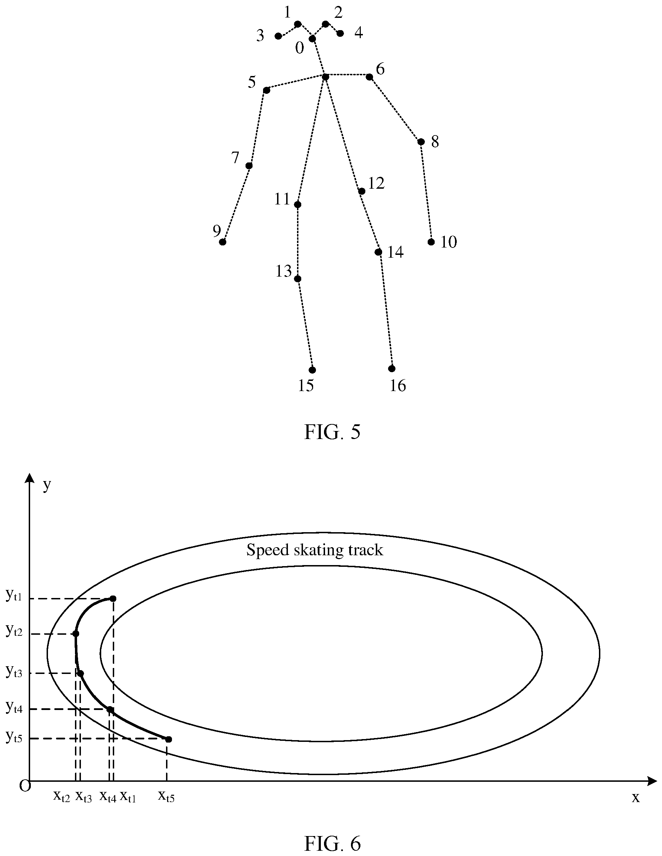

Optionally, the target object is a human body. Skeleton points of the human body include but are not limited to a nose, eyes, ears, shoulders, elbows, wrists, hips, knees, ankles, and the like. For example, FIG. 5 is a diagram of distribution of human skeleton points according to an embodiment of this application. As shown in FIG. 5, the human body may include 17 skeleton points: a nose 0, a left eye 1, a right eye 2, a left ear 3, a right ear 4, a left shoulder 5, a right shoulder 6, a left elbow 7, a right elbow 8, a left wrist 9, a right wrist 10, a left hip 11, a right hip 12, a left knee 13, a right knee 14, a left ankle 15, and a right ankle 16. After determining the imaging area of the target object, the video analysis device may detect the 17 skeleton points of the target object, to determine imaging coordinates of each skeleton point of the target object.

In some cases, not all the 17 skeleton points of the target object can be detected. For example, when the target object is in a sideways state, only some skeleton points can be detected. In other words, there may be a skeleton point that can be directly reflected in the imaging area of the target object, and there may also be a skeleton point that cannot be reflected. In this case, the video analysis device may determine only imaging coordinates of the skeleton point that can be directly reflected. Certainly, the video analysis device may further infer, according to a related algorithm, imaging coordinates of the skeleton point that cannot be reflected in imaging.

In some other embodiments, in addition to the imaging coordinates of the skeleton point, the skeleton data may further include coordinates of the skeleton point in a world coordinate system. In this case, after determining the imaging coordinates of the skeleton point of the target object based on the foregoing process, the video analysis device may further convert the imaging coordinates of the skeleton point of the target object to the world coordinate system, to obtain the coordinates of the skeleton point of the target object in the world coordinate system.

In embodiments of this application, all the cameras are rigidly deployed in the target scene, and a camera parameter of each camera is preset. In a photographing process, a photographing area and a photographing focus of each camera are constant, and therefore an image coordinate system of each camera is constant. In addition, after the camera is deployed, the camera may be further calibrated, to determine a transformation relationship between the image coordinate system of the camera and the world coordinate system. In this way, after the imaging coordinates of the skeleton point of the target object are determined, the imaging coordinates may be converted, based on the transformation relationship between the image coordinate system of the camera that is used to photograph the target video and the world coordinate system, from the image coordinate system of the camera to the world coordinate system, to obtain the coordinates of the skeleton point of the target object in the world coordinate system.

It should be noted that the skeleton data may alternatively include only the imaging coordinates of the skeleton point, or include only the coordinates of the skeleton point in the world coordinate system. In addition, the skeleton data may further include other data. This is not limited in embodiments of this application. In addition, the target object may be one or more moving objects in general.

Step 403: The video analysis device encapsulates the first bitstream data of the target video image and the skeleton data of the target object in the target video image, to obtain second bitstream data of the target video image.

In other words, the video analysis device encapsulates the first bitstream data of the target video image and the skeleton data of the target object in the target video image into one frame of data, to obtain the second bitstream data of the target video image.

In some embodiments, after encapsulating the first bitstream data of the target video image and the skeleton data of the target object in the target video image, to obtain the second bitstream data of the target video image, the video analysis device may further generate media description information. The media description information includes description information of the first bitstream data and description information of the skeleton data of the target object.

The video analysis device may not only encapsulate the first bitstream data of the target video image and the skeleton data of the target object in the target video image together, but also encapsulate other data together with the first bitstream data of the target video image and the skeleton data of the target object in the target video image, such as audio data and motion data.

In an example, the video analysis device may further obtain target audio data corresponding to the target video image, and encapsulate the first bitstream data of the target video image, the skeleton data of the target object in the target video image, and the target audio data, to obtain the second bitstream data of the target video image. In other words, the video analysis device encapsulates the first bitstream data of the target video image, the skeleton data of the target object in the target video image, and the target audio data together.

The target video may include the audio data. Therefore, the video analysis device may obtain, from the target video, the target audio data corresponding to the target video image. Certainly, the video analysis device may alternatively dub the target video. Therefore, the video analysis device may determine, from a dubbing audio, the target audio data corresponding to the target video image.

In another example, the video analysis device may further determine motion data corresponding to the target video image. The motion data is used to describe a motion status of the target object in the target scene obtained when the target video image is captured. Then, the video analysis device encapsulates the first bitstream data of the target video image, the skeleton data of the target object in the target video image, and the motion data corresponding to the target video image, to obtain the second bitstream data of the target video image. In other words, the video analysis device encapsulates the first bitstream data of the target video image, the skeleton data of the target object in the target video image, and the motion data corresponding to the target video image together.

The motion data corresponding to the target video image includes an instantaneous speed, a motion track, a displacement during motion, an average speed, a quantity of steps, and the like. When the motion data includes the instantaneous speed, the instantaneous speed is used to describe a speed of the target object in the target scene obtained at a moment when the target video image is captured. When the motion data includes the motion track, the motion track is used to describe a track in a moving process of the target object in the target scene obtained when the target video image is captured. When the motion data includes the displacement during motion, the displacement during motion is used to describe a displacement in a moving process of the target object in the target scene obtained when the target video image is captured. When the motion data includes the average speed, the average speed is used to describe an average speed in a moving process of the target object in the target scene obtained when the target video image is captured. When the motion data includes the quantity of steps, the quantity of steps is used to describe a quantity of steps in a moving process of the target object in the target scene obtained when the target video image is captured. In other words, the instantaneous speed is used to describe a motion status of the target object in the target scene obtained at the moment when the target video image is captured, and the motion track, the displacement during motion, the average speed, and the quantity of steps are used to describe a motion status of the target object in the target scene obtained from a moment when the target video is started to be captured to the moment when the target video image is captured.

When the motion data includes the instantaneous speed, an implementation process in which the video analysis device determines the motion data of the target object in the target scene includes: determining the instantaneous speed of the target object based on coordinates of a key skeleton point of the target object in the target video image in the world coordinate system, and coordinates of the key skeleton point of the target object in one or more adjacent frames of video image that are in a target video stream and that are located before the target video image in the world coordinate system.

The target video has a frame rate, for example, 25 frames per second. Therefore, the video analysis device can determine duration between two adjacent frames of video image. In this way, the video analysis device may determine a migration length of the key skeleton point based on the coordinates of the key skeleton point of the target object in the target video image in the world coordinate system and coordinates of the key skeleton point of the target object in a reference video image in the target video stream in the world coordinate system. The reference video image is a first frame of video image among the one or more adjacent video images. Duration between the target video image and the reference video image is determined. The instantaneous speed of the target object can be obtained by dividing the migration length by the duration.

When the reference video image is a plurality of frames away from the target video image, an error of the instantaneous speed determined by using the foregoing method is small. For example, when the reference video image is five frames away from the target video image, an error of the instantaneous speed determined by using the foregoing method is small.

The key skeleton point is one or more skeleton points in the skeleton points of the target object. When the key skeleton point includes a plurality of skeleton points, the video analysis device may determine, according to the foregoing method, an instantaneous speed corresponding to each key skeleton point. Then, an average value of instantaneous speeds of the plurality of key skeleton points is obtained, to obtain the instantaneous speed of the target object. Certainly, processing may be performed in another manner. This is not limited in this application.

When the motion data includes the motion track, an implementation process in which the video analysis device determines the motion data of the target object in the target scene includes: generating the motion track of the target object based on horizontal coordinates of a key skeleton point of the target object in the target video image in the world coordinate system. In other words, the video analysis device generates a motion track each time a frame of video image is analyzed. In this way, based on a motion track generated when a previous frame of video image of the target video image is analyzed the video analysis device may add a track between the previous frame of video image and the target video image based on the horizontal coordinates of the key skeleton point of the target object in the target video image in the world coordinate system, to obtain the motion track of the target object in the target scene at a moment when the target video image is captured. In other words, when the target video image is captured, the motion track of the target object in the target scene is determined based on the target video image and the horizontal coordinates, in the world coordinate system, of the key skeleton point of the target object in the video image before the target video image. The key skeleton point may be one skeleton point.

For example, FIG. 6 is a diagram of a motion track of a target object according to an embodiment of this application. As shown in FIG. 6, the target object moves on a speed skating track. Two-dimensional horizontal coordinates of a key skeleton point of the target object obtained at a moment when a first frame of video image is captured are (xₜ₁, yu). Two-dimensional horizontal coordinates of the key skeleton point of the target object obtained at a moment when a second frame of video image is captured are (xₜ₂, yₜ₂). Two-dimensional horizontal coordinates of the key skeleton point of the target object obtained at a moment when a third frame of video image is captured are (xₜ₃, yₜ₃). Two-dimensional horizontal coordinates of the key skeleton point of the target object obtained at a moment when a fourth frame of video image is captured are (xₜ₄, yₜ₄). Two-dimensional horizontal coordinates of the key skeleton point of the target object obtained at a moment when a fifth frame of video image is captured are (xₜ₅, yₜ₅). It is assumed that the target video image is the fifth frame of video image. In this case, the video analysis device may add a motion track between the fourth frame and the fifth frame to a motion track obtained from the first four frames of video image, and finally obtain a motion track on a horizontal plane. The two-dimensional horizontal coordinates reflect a horizontal location in a world coordinate system.

The video analysis device may determine a displacement during motion, an average speed, and a quantity of steps in a related manner. For example, after determining an instantaneous speed, the video analysis device may determine duration from a moment when a target video is started to be captured to a moment when the target video image is captured, and determine a displacement during motion in the time period, to obtain the average speed by dividing the displacement during motion by the duration. For another example, when the quantity of steps of the target object is calculated, based on a target video stream, each time of intersection of left and right ankles of the target object is determined as a step, to calculate the quantity of steps.

When the video analysis device further encapsulates target audio data and motion data corresponding to the target video image together with first bitstream data of the target video image and skeleton data of the target object in the target video image, media description information generated by the video analysis device not only includes description information of the first bitstream data of the target video image and description information of the skeleton data of the target object, but also may include description information of target audio data, description information of motion data, and the like.

In embodiments of this application, the video analysis device may encapsulate the foregoing data in an encapsulation format, for example, dash or hls. Certainly, another encapsulation format may be alternatively used. This is not limited in embodiments of this application. When the foregoing data is encapsulated in the dash or his encapsulation format, second bitstream data of the target video image is written into a data fragment. In addition, one data fragment may include a plurality of frames of data. For example, one data fragment includes 25 frames of data or 32 frames of data. This is not limited in embodiments of this application.

The description information mentioned above may include an identifier, a type, an encoding format, and the like, and certainly may further include other information. This is not limited in embodiments of this application. For example, the video analysis device encapsulates the first bitstream data of the target video image, the skeleton data of the target object in the target video image, and the target audio data corresponding to the target video image together, and the video analysis device encapsulates the data in the dash encapsulation format. In this case, the media description information may be referred to as a media presentation description (media presentation description, MPD). The media description information includes three adaptation sets (Adaptation Sets). An identifier of a first adaptation set is 0, and a content type is an audio. The first adaptation set includes description information of the target audio data. In other words, an identifier of the target audio data is 0, a media presentation type is an audio/mp4, and an encoding format is mp4a.40.2. An identifier of a second adaptation set is cam1, and a content type is a video. The second adaptation set includes description information of the first bitstream data of the target video image. In other words, an identifier of the first bitstream data of the target video image is cam1, a media presentation type is a video/mp4, and an encoding format is avc1. An identifier of a third adaptation set is personPose, and a content type is a text. The third adaptation set includes description information of the skeleton data of the target object in the target video image. In other words, an identifier of the skeleton data is an identifier cam1_2dPose, a media presentation type is an application/mp4, and an encoding format is zip.

Content of the MPD may be as follows:

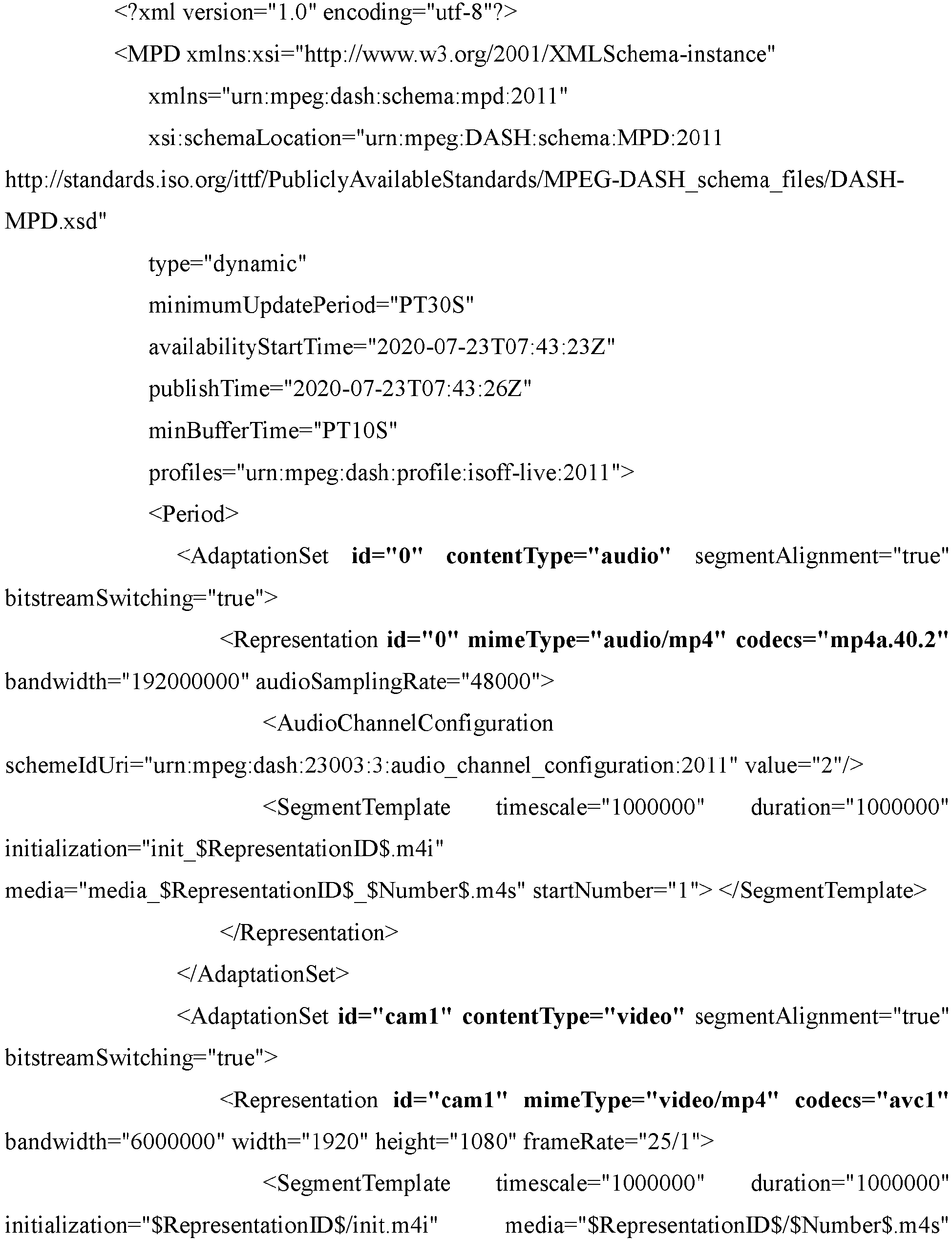

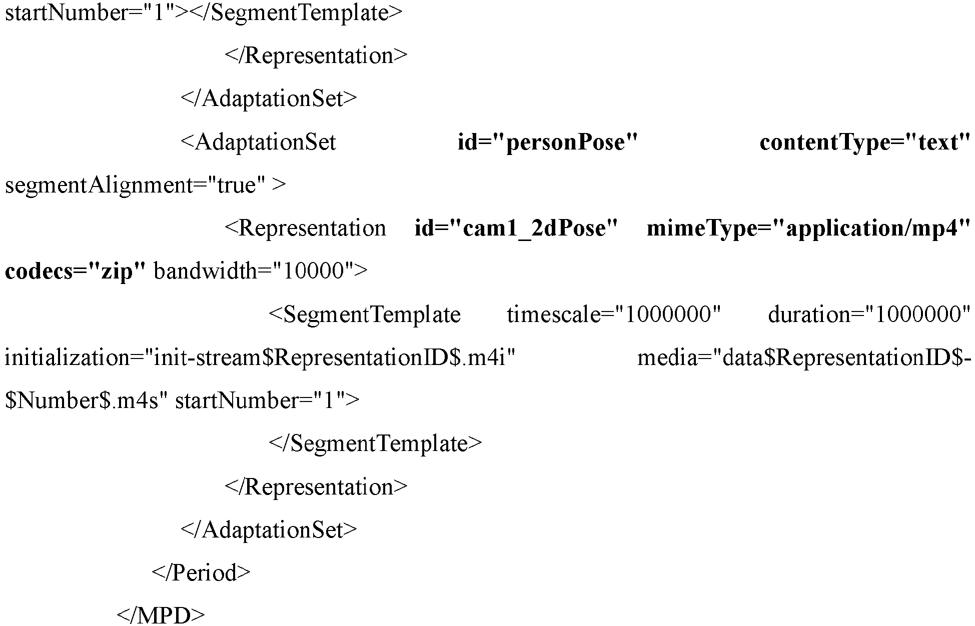

Optionally, after determining that the second bitstream data of the target video image is obtained, the video analysis device may further send the second bitstream data of the target video image to a terminal device for display. Alternatively, the video analysis device may further send the second bitstream data of the target video image to a management device. The management device sends the second bitstream data of the target video image to a terminal device for display. Optionally, when the management device has a display function, the management device may alternatively perform display. The following uses an example in which the terminal device performs display for description.

In some embodiments, the terminal device obtains the second bitstream data of the target video image. The second bitstream data includes the first bitstream data of the target video image and the skeleton data of the target object in the target video image. The terminal device parses the second bitstream data of the target video image to obtain the first bitstream data of the target video image and the skeleton data of the target object in the target video image, displays the target video image on a playing interface based on the first bitstream data of the target video image, and displays a mark box of the target object on the playing interface based on the skeleton data of the target object in the target video image.

The terminal device may parse the first bitstream data of the target video image to obtain the target video image and display the target video image on the playing interface. In addition, the terminal device determines an imaging area of the target object based on the skeleton data of the target object in the target video image, and displays the mark box of the target object in the imaging area of the target object.

Based on the foregoing description, the skeleton data of the target object may include imaging coordinates of a skeleton point of the target object, or may include coordinates of a skeleton point of the target object in a world coordinate system. When the skeleton data of the target object includes the imaging coordinates of the skeleton point of the target object, the imaging area of the target object in the target video image may be determined based on the imaging coordinates of the skeleton point of the target object, to display the mark box of the target object. When the skeleton data of the target object includes the coordinates of the skeleton point of the target object in the world coordinate system, the coordinates of the skeleton point of the target object in the world coordinate system may be converted into imaging coordinates, and the imaging area of the target object in the target video image is determined based on the imaging coordinates of the skeleton point of the target object, to display the mark box of the target object.

When the second bitstream data of the target video image further includes target audio data corresponding to the target video image, the terminal device may further obtain the target audio data by parsing the second bitstream data. When displaying the target video image and the mark box of the target object on the playing interface, the terminal device may also play the target audio data.

When the second bitstream data of the target video image further includes motion data corresponding to the target video image, the terminal device may further obtain the motion data corresponding to the target video image by parsing the second bitstream data. When displaying the target video image and the mark box of the target object on the playing interface, the terminal device may also display the motion data on the playing interface.

When the second bitstream data of the target video image does not include the motion data corresponding to the target video image, the terminal device may determine, based on the skeleton data of the target object in the target video image, the motion data corresponding to the target video image. When displaying the target video image and the mark box of the target object on the playing interface, the terminal device may also display the motion data on the playing interface. An implementation process in which the terminal device determines, based on the skeleton data of the target object in the target video image, the motion data corresponding to the target video image is similar to the foregoing process in which the video analysis device determines the motion data. Details are not described herein again.

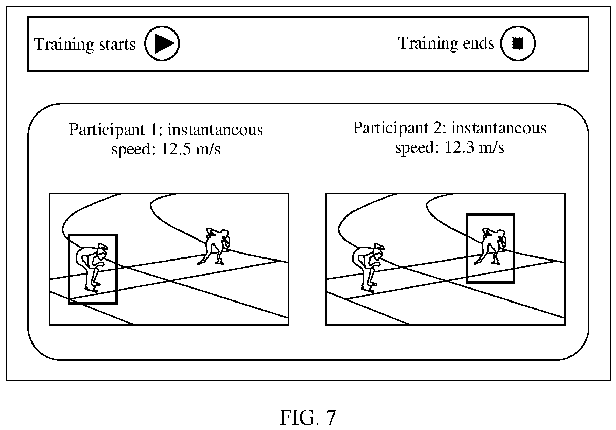

For example, an athlete is trained in a speed skating scene. FIG. 7 is a diagram of a playing interface according to an embodiment of this application. As shown in FIG. 7, a target video image and a mark box of a target athlete are displayed on the playing interface. In addition, in FIG. 7, the target athlete includes a participant 1 and a participant 2. An instantaneous speed of the participant 1 and an instantaneous speed of the participant 2 are also displayed on the playing interface.

Optionally, the playing interface may include a plurality of areas. The plurality of areas are used to display the foregoing various types of data. For example, the plurality of areas are respectively an angle of view selection area, a video playing area, a motion track display area, a speed display area, a quantity of steps display area, and the like. The angle of view selection area is used to display angles of view corresponding to a plurality of cameras. In this way, a user may select, from the angle of view selection area, an angle of view of a playing picture that needs to be displayed. The video playing area is used to display a video image of each selected angle of view. The motion track display area is used to display a motion track of the target object. The speed display area is used to display a speed of the target object. The quantity of steps display area is used to display a quantity of steps of the target object. Optionally, when the target video includes a plurality of moving objects, the playing interface may further include a moving object selection area.

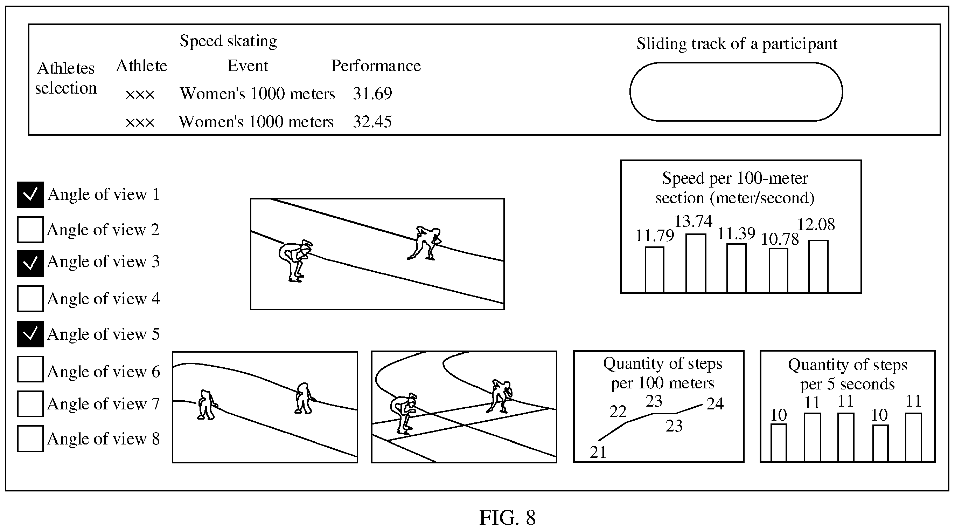

For example, FIG. 8 is a diagram of another playing interface according to an embodiment of this application. As shown in FIG. 8, the playing interface includes a moving object selection area, an angle of view selection area, a video playing area, a motion track display area, a speed display area, and a quantity of steps display area. The moving object selection area includes two athletes. A user may select one athlete from the two athletes, so that related information of the athlete may be displayed in another area. The angle of view selection area includes eight angles of view. Each angle of view corresponds to a camera, and further corresponds to a video image. It is assumed that the user selects an angle of view 1, an angle of view 3, and an angle of view 5. Video images of these angles of view may be displayed in the video playing area. The speed display area is used to display a speed of the athlete per 100-meter section. The quantity of steps display area includes two sub-areas: an area of a quantity of steps per 100 meters and an area of a quantity of steps per 5 seconds. The area of a quantity of steps per 100 meters is used to display a quantity of steps of the athlete within 100 meters, and the area of a quantity of steps per 5 seconds is used to display a quantity of steps of the athlete within 5 seconds.

In embodiments of this application, when displaying the target video image and the mark box of the target object, the terminal device displays the motion data of the target object, including but not limited to the motion track of the target object, the quantity of steps of the target object, the displacement of the target object, the motion speed of the target object, or the like. In other words, when displaying the target video image, the terminal device may also display a real-time motion analysis result of the target object on a playing picture in a superimposed manner, for example, display a real-time motion track, a real-time quantity of steps, a real-time displacement, a real-time speed, and the like of the target object on the playing picture in the superimposed manner, so that an original video image is synchronized with the skeleton data, the motion data, and the like that are obtained through analysis. This increases flexibility, real-time performance, and correlation of data processing, thereby facilitating analysis on motion of the target object.

A sequence of the steps of the video processing method provided in embodiments of this application can be appropriately adjusted, and the steps can also be correspondingly added or deleted based on a situation. Any varied method readily figured out by a person skilled in the art within the technical scope disclosed in this application shall fall within the protection scope of this application. In addition, the camera deployed in the target scene may also be implemented in a manner of remotely controlling an uncrewed aerial vehicle or the like.

In embodiments of this application, the skeleton data, the target audio data, the motion data, and the like of the target object in the target video image can be determined by analyzing the target video image, so that the data and the first bitstream data of the target video image are encapsulated together. In this way, when the target video image is displayed, the data may also be displayed in real time. In other words, the first bitstream data of the original target video image and some data obtained through analysis are encapsulated together. This ensures synchronization between the first bitstream data and the data obtained through analysis, and improves flexibility, real-time performance, and correlation of data processing, thereby helping analyze the motion status of the target object and improving analysis accuracy. In addition, in the scene of athlete training, the finalized training plan can be more targeted.

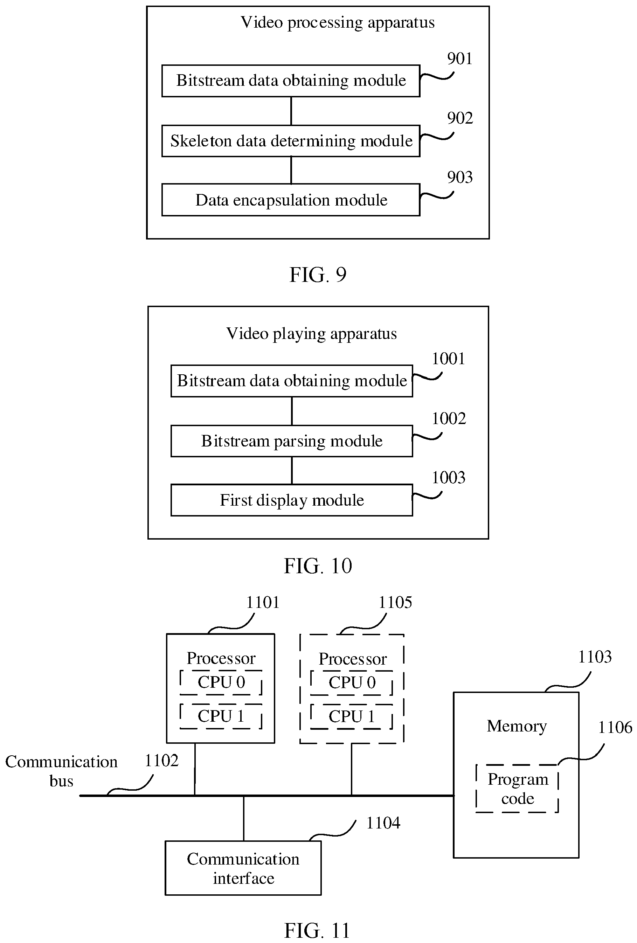

FIG. 9 is a diagram of a structure of a video processing apparatus according to an embodiment of this application. The video processing apparatus may be implemented as a part or all of a video analysis device by using software, hardware, or a combination thereof. The video analysis device may be the video analysis device shown in FIG. 1 or FIG. 3. With reference to FIG. 9, the apparatus includes a bitstream data obtaining module 901, a skeleton data determining module 902, and a data encapsulation module 903.

The bitstream data obtaining module 901 is configured to obtain first bitstream data of a target video image. The target video image is a frame of video image in a target video. The target video is obtained by capturing a target scene. The target scene includes one or more moving objects.

The skeleton data determining module 902 is configured to determine skeleton data of a target object in the target video image based on the first bitstream data. The target object is one of the one or more moving objects.

The data encapsulation module 903 is configured to encapsulate the first bitstream data of the target video image and the skeleton data of the target object in the target video image, to obtain second bitstream data of the target video image.

Optionally, the skeleton data includes imaging coordinates of a skeleton point. The imaging coordinates are coordinates of the skeleton point in the target video image.

The skeleton data determining module 902 is specifically configured to:
parse the first bitstream data, to obtain the target video image;
detect the target object in the target video image, to determine an imaging area of the target object; and
determine the imaging coordinates of the skeleton point of the target object based on the imaging area.

Optionally, the skeleton data further includes coordinates of the skeleton point in a world coordinate system.

The skeleton data determining module 902 is further configured to:
convert the imaging coordinates of the skeleton point of the target object to the world coordinate system, to obtain the coordinates of the skeleton point of the target object in the world coordinate system.

Optionally, the apparatus further includes:
a description information generation module, configured to generate media description information. The media description information includes description information of the first bitstream data and description information of the skeleton data of the target object.

Optionally, the apparatus further includes:
an audio data obtaining module, configured to obtain target audio data corresponding to the target video image.

The data encapsulation module 903 is specifically configured to:
encapsulate the first bitstream data of the target video image, the skeleton data of the target object in the target video image, and the target audio data, to obtain the second bitstream data of the target video image.

Optionally, the apparatus further includes:
a motion data determining module, configured to determine motion data corresponding to the target video image. The motion data is used to describe a motion status of the target object in the target scene obtained when the target video image is captured.

The data encapsulation module 903 is specifically configured to:
encapsulate the first bitstream data of the target video image, the skeleton data of the target object in the target video image, and the motion data, to obtain the second bitstream data of the target video image.

Optionally, a plurality of cameras are deployed in the target scene, and the target video is a video obtained by any one of the plurality of cameras by capturing the target scene; or
the target video is a video corresponding to the target object, and the video corresponding to the target object is obtained through video synthesis performed on videos captured by the plurality of cameras, and is used to record a moving process of the target object in the target scene.

In embodiments of this application, the skeleton data, the target audio data, the motion data, and the like of the target object in the target video image can be determined by analyzing the target video image, so that the data and the first bitstream data of the target video image are encapsulated together. In this way, when the target video image is displayed, the data may also be displayed in real time. In other words, the first bitstream data of the original target video image and some data obtained through analysis are encapsulated together. This ensures synchronization between the first bitstream data and the data obtained through analysis, and improves flexibility, real-time performance, and correlation of data processing, thereby helping analyze the motion status of the target object and improving analysis accuracy. In addition, in a scene of athlete training, the finalized training plan can be more targeted.

It should be noted that, when the video processing apparatus provided in the foregoing embodiments processes a video, division of the foregoing functional modules is merely used as an example for description. During actual application, the foregoing functions may be allocated to different functional modules and implemented according to a requirement. In other words, an inner structure of the apparatus is divided into different functional modules to implement all or some of the functions described above. In addition, the video processing apparatus provided in the foregoing embodiments and the video processing method embodiments pertain to a same concept. For specific implementation processes thereof, refer to the method embodiments. Details are not described herein again.

FIG. 10 is a diagram of a structure of a video playing apparatus according to an embodiment of this application. The video playing apparatus may be implemented as a part or all of a management device or a terminal device by using software, hardware, or a combination thereof. The device may be the management device or the terminal device shown in FIG. 3. With reference to FIG. 10, the apparatus includes a bitstream data obtaining module 1001, a bitstream parsing module 1002, and a first display module 1003.

The bitstream data obtaining module 1001 is configured to obtain second bitstream data of a target video image. The second bitstream data includes first bitstream data of the target video image and skeleton data of a target object in the target video image. The target video image is a frame of video image in a target video. The target video is obtained by capturing a target scene. The target object is one of one or more moving objects included in the target scene.

The bitstream parsing module 1002 is configured to parse the second bitstream data to obtain the first bitstream data of the target video image and the skeleton data of the target object in the target video image.

The first display module 1003 is configured to: display the target video image on a playing interface based on the first bitstream data, and display a mark box of the target object on the playing interface based on the skeleton data of the target object in the target video image.

Optionally, the second bitstream data further includes motion data corresponding to the target video image, and the motion data is used to describe a motion status of the target object in the target scene obtained when the target video image is captured. The apparatus further includes:
a second display module, configured to display the motion data on the playing interface.

Optionally, the apparatus further includes:
a motion data determining module, configured to determine, based on the skeleton data of the target object in the target video image, the motion data corresponding to the target video image, where the motion data is used to describe the motion status of the target object in the target scene obtained when the target video image is captured; and
a third display module, configured to display the motion data on the playing interface.

Optionally, a plurality of cameras are deployed in the target scene, and a target video stream is a video stream obtained by any one of the plurality of cameras by capturing the target scene; or
a target video stream is a video stream corresponding to the target object, and the video stream corresponding to the target object is obtained through video synthesis performed on video streams captured by the plurality of cameras, and is used to record a moving process of the target object in the target scene.

In embodiments of this application, the skeleton data, the target audio data, the motion data, and the like of the target object in the target video image can be determined by analyzing the target video image, so that the data and the first bitstream data of the target video image are encapsulated together. In this way, when the target video image is displayed, the data may also be displayed in real time. In other words, the first bitstream data of the original target video image and some data obtained through analysis are encapsulated together. This ensures synchronization between the first bitstream data and the data obtained through analysis, and improves flexibility, real-time performance, and correlation of data processing, thereby helping analyze the motion status of the target object and improving analysis accuracy. In addition, in a scene of athlete training, a finalized training plan can be more targeted.

It should be noted that, when the video playing apparatus provided in the foregoing embodiments plays a video, division of the foregoing functional modules is merely used as an example for description. During actual application, the foregoing functions may be allocated to different functional modules and implemented according to a requirement. In other words, an inner structure of the apparatus is divided into different functional modules to implement all or some of the functions described above. In addition, the video playing apparatus provided in the foregoing embodiments and the video playing method embodiments pertain to a same concept. For specific implementation processes thereof, refer to the method embodiments. Details are not described herein again.

FIG. 11 is a diagram of a structure of a computer device according to an embodiment of this application. The computer device may be the video analysis device or the management device shown in FIG. 1 or FIG. 3. The computer device includes a processor 1101 and a memory 1102. The memory 1102 is configured to store a computer program. The computer program includes program instructions. The processor 1101 is configured to invoke the computer program to implement the method steps shown in FIG. 4 in the foregoing method embodiment.

The processor 1101 may be a general-purpose central processing unit (central processing unit, CPU), a network processor (network processor, NP), a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 1102 may be a read-only memory (read-only memory, ROM), a random access memory (random access memory, RAM), an electrically erasable programmable read-only memory (electrically erasable programmable read-only Memory, EEPROM), an optical disc (which includes a compact disc read-only memory (compact disc read-only memory, CD-ROM), a compact disc, a laser disc, a digital versatile disc, a Blu-ray disc, and the like), a magnetic disk storage medium, another magnetic storage device, or any other medium that can be configured to carry or store expected program code in a form of instruction or data structure and that can be accessed by a computer. However, the memory is not limited thereto. The memory 1102 may exist independently, and is connected to the processor 1101. Alternatively, the memory 1102 may be integrated with the processor 1101.

Optionally, the network device may further include a communication bus 1103 and at least one communication interface 1104. The communication bus 1103 is configured to transmit information between the foregoing components. The communication bus 1103 may be classified into an address bus, a data bus, a control bus, or the like. For ease of representation, only one thick line is used to represent the bus in the figure, but this does not mean that there is only one bus or only one type of bus.

The communication interface 1104 is configured to communicate with another device or a communication network by using any transceiver-type apparatus. The communication interface 1104 includes a wired communication interface, and may further include a wireless communication interface. The wired communication interface may be, for example, an ethernet interface. The ethernet interface may be an optical interface, an electrical interface, or a combination thereof. The wireless communication interface may be a wireless local area network (wireless local area network, WLAN) interface, a cellular network communication interface, a combination thereof, or the like.

Optionally, in an embodiment, the processor 1101 may include one or more CPUs, for example, a CPU 0 and a CPU 1 shown in FIG. 11.

Optionally, in an embodiment, the network device may include a plurality of processors, for example, a processor 1101 and a processor 1105 shown in FIG. 11. Each of the processors may be a single-core processor, or may be a multi-core processor. The processor herein may be one or more devices, circuits, and/or processing cores configured to process data (for example, computer program instructions).

In some embodiments, the memory 1102 is configured to store program code 1106 for executing embodiments of this application, and the processor 1101 may execute the program code 1106 stored in the memory 1102. The program code 1106 may include one or more software modules. The network device may implement, by using the processor 1101 and the program code 1106 in the memory 1102, the method provided in the embodiment shown in FIG. 4.

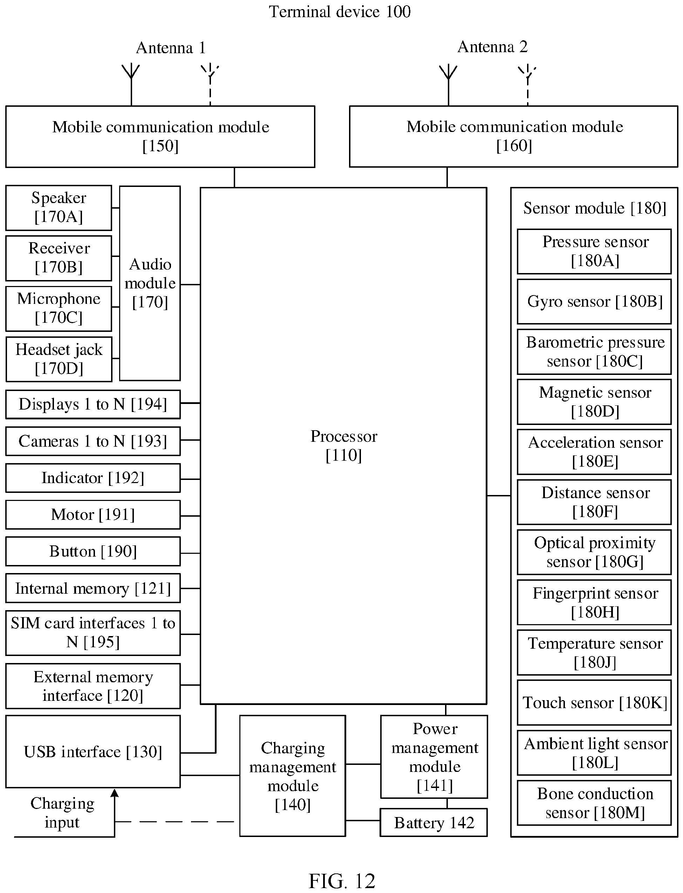

FIG. 12 is a diagram of a structure of a terminal device according to an embodiment of this application. The terminal device 100 may include a memory and a processor. The memory is configured to store a computer program, and the computer program includes program instructions. The processor is configured to invoke the computer program to implement the steps of the video playing method in the foregoing method embodiments. Certainly, the terminal device 100 may further include another component.

In some embodiments, the terminal device 100 includes a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, and a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and the like.

It can be understood that the structure shown in embodiments of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. The processor 110 may execute the computer program, to implement any video playing method in embodiments of this application.

The controller may be a nerve center and a command center of the terminal device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instruction or the data again, the processor 110 may directly invoke the instruction or the data from the memory, to avoid repeated access and reduce a waiting time of the processor 110, thereby improving efficiency of the electronic device,

In some embodiments, the processor 110 may include one or more interfaces. The interface may include an inter-integrated circuit (inter-integrated circuit, I1C) interface, an inter-integrated circuit sound (inter-integrated circuit sound, IIS) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between the modules shown in embodiments of this application is merely an example for description, and constitutes no limitation on the structure of the terminal device 100. In some other embodiments of this application, different interface connection manners in the foregoing embodiments or a combination of a plurality of interface connection manners may alternatively be used for the terminal device 100.

The charging management module 140 is configured to receive a charging input from a charger. The charger may be a wireless charger or a wired charger. In some embodiments of wired charging, the charging management module 140 may receive a charging input from the wired charger through the USB interface 130.

The power management module 141 is configured to connect to the battery 142, the charging management module 140, and the processor 110. The power management module 141 receives input from the battery 142 and/or the charging management module 140, to supply power to the processor 110, the internal memory 121, the external memory, the display 194, the camera 193, the wireless communication module 160, and the like.

A wireless communication function of the terminal device 100 may be implemented by using the antenna 1, the antenna 2, the mobile communication module 150, the wireless communication module 160, the modem processor, the baseband processor, and the like.

In some feasible implementations, the terminal device 100 may communicate with another device by using the wireless communication function. For example, the terminal device 100 may communicate with a second electronic device, the terminal device 100 establishes a casting connection to the second electronic device, and the terminal device 100 outputs casting data to the second electronic device. The casting data output by the terminal device 100 may be audio/video data.

The antenna 1 and the antenna 2 are configured to transmit and receive electromagnetic wave signals. Each antenna in the terminal device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 1G/3G/4G/5G and that is applied to the terminal device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 2. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the terminal device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near-field communication (near-field communication, NFC) technology, an infrared (infrared, IR) technology, and the like. The wireless communication module 160 may be one or more devices integrating at least one communication processor module. The wireless communication module 160 receives an electromagnetic wave through the antenna 1, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, the antenna 1 and the mobile communication module 150 in the terminal device 100 are coupled, and the antenna 2 and the wireless communication module 160 in the terminal device 100 are coupled, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite systems, QZSS), and/or a satellite based augmentation system (satellite based augmentation system, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device 100 may include one or N displays 194, where N is a positive integer greater than 1.

In some feasible implementations, the display 194 may be configured to display various interfaces output by a system of the terminal device 100.

The terminal device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the terminal device 100 may include one or N cameras 193, where N is a positive integer greater than 1.

The digital signal processor is configured to process a digital signal, and may process another digital signal in addition to the digital image signal.

The video codec is configured to compress or decompress a digital video. The terminal device 100 may support one or more video codecs. In this way, the terminal device 100 can play or record videos in various encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. The NPU may be configured to implement applications such as intelligent cognition of the terminal device 100, for example, image recognition, facial recognition, voice recognition, and text understanding.

The external memory interface 120 may be configured to connect to an external storage card, for example, a micro SD card, to extend a storage capability of the terminal device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the terminal device 100. The internal memory 121 may include a program storage area and a data storage area. The program storage area may store an operating system. An application program needed by at least one function (for example, an indoor positioning method in embodiments of this application), and the like. The data storage area may store data (for example, audio data or a phone book) created in a process of using the terminal device 100, and the like. In addition, the internal memory 121 may include a high-speed random access memory, or may include a nonvolatile memory, for example, at least one magnetic disk storage device, a flash memory, or a universal flash storage (universal flash storage, UFS).

The terminal device 100 may implement an audio function through the audio module 170, the speaker 170A, the receiver 170B, the microphone 170C, the headset jack 170D, and the application processor, for example, music playing and sound recording. In some feasible implementations, the audio module 170 may be configured to play a sound corresponding to a video. For example, when the display 194 displays a video playing picture, the audio module 170 outputs a video playing sound.

The audio module 170 is configured to convert digital audio information into an analog audio signal for output, and is also configured to convert an analog audio input into a digital audio signal.

The speaker 170A, also referred to as a "loudspeaker", is configured to convert an audio electrical signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. The gyro sensor 180B may be configured to determine a moving posture of the terminal device 100. The barometric pressure sensor 180C is configured to measure barometric pressure.

The acceleration sensor 180E may detect magnitudes of accelerations of the terminal device 100 in various directions (usually on three axes or six axes). When the terminal device 100 is still, a magnitude and a direction of gravity may be detected. The acceleration sensor 180E may be further configured to recognize an attitude of the terminal device, and is applied to switching between a landscape mode and a portrait mode, a pedometer, and the like.

The distance sensor 180F is configured to measure a distance.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the terminal device 100 at a location different from that of the display 194.

The button 190 includes a power button, a volume button, and the like. The button 190 may be a mechanical button, or may be a touch button. The terminal device 100 may receive a key input, and generate a key signal input related to a user setting and function control of the terminal device 100.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

All or some of the foregoing embodiments may be implemented by software, hardware, firmware, or any combination thereof. When software is used to implement the embodiments, all or a part of the embodiments may be implemented in a form of computer program product. The computer program product includes one or more computer instructions. When the computer instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like. It should be noted that the computer-readable storage medium mentioned in embodiments of this application may be a nonvolatile storage medium, that is, may be a non-transitory storage medium.

It should be understood that "a plurality of in this specification means two or more. In the descriptions of embodiments of this application, unless otherwise stated, "/" means "or", for example, A/B may indicate A or B. The term "and/or" in this specification describes only an association relationship between associated objects, and indicates that three relationships may exist. For example, A and/or B may indicate three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that terms such as "first" and "second" do not limit a quantity or an execution sequence, and terms such as "first" and "second" do not indicate a definite difference.

The foregoing descriptions are merely embodiments of this application, but are not intended to limit this application. Any modification, equivalent replacement, or improvement made without departing from the spirit and principle of this application should fall within the protection scope of this application.

## Claims

1. A video processing method, wherein the method comprises:
obtaining first bitstream data of a target video image, wherein the target video image is a frame of video image in a target video, the target video is obtained by capturing a target scene, and the target scene comprises one or more moving objects;
determining skeleton data of a target object in the target video image based on the first bitstream data, wherein the target object is one of the one or more moving objects; and
encapsulating the first bitstream data of the target video image and the skeleton data of the target object in the target video image, to obtain second bitstream data of the target video image.

2. The method according to claim 1, wherein the skeleton data comprises imaging coordinates of a skeleton point, and the imaging coordinates are coordinates of the skeleton point in the target video image; and
the determining skeleton data of a target object in the target video image based on the first bitstream data comprises:
parsing the first bitstream data, to obtain the target video image;
detecting the target object in the target video image, to determine an imaging area of the target object; and
determining the imaging coordinates of the skeleton point of the target object based on the imaging area.

3. The method according to claim 2, wherein the skeleton data further comprises coordinates of the skeleton point in a world coordinate system; and
the determining skeleton data of a target object in the target video image based on the first bitstream data further comprises:
converting the imaging coordinates of the skeleton point of the target object to the world coordinate system, to obtain the coordinates of the skeleton point of the target object in the world coordinate system.

4. The method according to any one of claims 1 to 3, wherein the method further comprises:
generating media description information, wherein the media description information comprises description information of the first bitstream data and description information of the skeleton data of the target object.

5. The method according to any one of claims 1 to 4, wherein the method further comprises:
obtaining target audio data corresponding to the target video image; and
the encapsulating the first bitstream data of the target video image and the skeleton data of the target object in the target video image, to obtain second bitstream data of the target video image comprises:
encapsulating the first bitstream data of the target video image, the skeleton data of the target object in the target video image, and the target audio data, to obtain the second bitstream data of the target video image.

6. The method according to any one of claims 1 to 4, wherein the method further comprises:
determining motion data corresponding to the target video image, wherein the motion data is used to describe a motion status of the target object in the target scene obtained when the target video image is captured; and
the encapsulating the first bitstream data of the target video image and the skeleton data of the target object in the target video image, to obtain second bitstream data of the target video image comprises:
encapsulating the first bitstream data of the target video image, the skeleton data of the target object in the target video image, and the motion data, to obtain the second bitstream data of the target video image.

7. The method according to any one of claims 1 to 6, wherein a plurality of cameras are deployed in the target scene, and the target video is a video obtained by any one of the plurality of cameras by capturing the target scene; or
the target video is a video corresponding to the target object, and the video corresponding to the target object is obtained through video synthesis performed on videos captured by the plurality of cameras, and is used to record a moving process of the target object in the target scene.

8. A video playing method, wherein the method comprises:
obtaining second bitstream data of a target video image, wherein the second bitstream data comprises first bitstream data of the target video image and skeleton data of a target object in the target video image, the target video image is a frame of video image in a target video, the target video is obtained by capturing a target scene, and the target object is one of one or more moving objects comprised in the target scene;
parsing the second bitstream data to obtain the first bitstream data of the target video image and the skeleton data of the target object in the target video image; and
displaying the target video image on a playing interface based on the first bitstream data, and displaying a mark box of the target object on the playing interface based on the skeleton data of the target object in the target video image.

9. The method according to claim 8, wherein the second bitstream data further comprises motion data corresponding to the target video image, and the motion data is used to describe a motion status of the target object in the target scene obtained when the target video image is captured; and the method further comprises:
displaying the motion data on the playing interface.

10. The method according to claim 8, wherein the method further comprises:
determining, based on the skeleton data of the target object in the target video image, the motion data corresponding to the target video image, wherein the motion data is used to describe the motion status of the target object in the target scene obtained when the target video image is captured; and
displaying the motion data on the playing interface.

11. The method according to any one of claims 8 to 10, wherein a plurality of cameras are deployed in the target scene, and a target video stream is a video stream obtained by any one of the plurality of cameras by capturing the target scene; or
a target video stream is a video stream corresponding to the target object, and the video stream corresponding to the target object is obtained through video synthesis performed on video streams captured by the plurality of cameras, and is used to record a moving process of the target object in the target scene.

12. A video processing apparatus, wherein the apparatus comprises:
a bitstream data obtaining module, configured to obtain first bitstream data of a target video image, wherein the target video image is a frame of video image in a target video, the target video is obtained by capturing a target scene, and the target scene comprises one or more moving objects;
a skeleton data determining module, configured to determine skeleton data of a target object in the target video image based on the first bitstream data, wherein the target object is one of the one or more moving objects; and
a data encapsulation module, configured to encapsulate the first bitstream data of the target video image and the skeleton data of the target object in the target video image, to obtain second bitstream data of the target video image.

13. The apparatus according to claim 12, wherein the skeleton data comprises imaging coordinates of a skeleton point, and the imaging coordinates are coordinates of the skeleton point in the target video image; and
the skeleton data determining module is specifically configured to:
parse the first bitstream data, to obtain the target video image;
detect the target object in the target video image, to determine an imaging area of the target object; and
determine the imaging coordinates of the skeleton point of the target object based on the imaging area.

14. The apparatus according to claim 13, wherein the skeleton data further comprises coordinates of the skeleton point in a world coordinate system; and
the skeleton data determining module is further configured to:
convert the imaging coordinates of the skeleton point of the target object to the world coordinate system, to obtain the coordinates of the skeleton point of the target object in the world coordinate system.

15. The apparatus according to any one of claims 12 to 14, wherein the apparatus further comprises:
a description information generation module, configured to generate media description information, wherein the media description information comprises description information of the first bitstream data and description information of the skeleton data of the target object.

16. The apparatus according to any one of claims 12 to 15, wherein the apparatus further comprises:
an audio data obtaining module, configured to obtain target audio data corresponding to the target video image; and
the data encapsulation module is specifically configured to:
encapsulate the first bitstream data of the target video image, the skeleton data of the target object in the target video image, and the target audio data, to obtain the second bitstream data of the target video image.

17. The apparatus according to any one of claims 12 to 15, wherein the apparatus further comprises:
a motion data determining module, configured to determine motion data corresponding to the target video image, wherein the motion data is used to describe a motion status of the target object in the target scene obtained when the target video image is captured; and
the data encapsulation module is specifically configured to:
encapsulate the first bitstream data of the target video image, the skeleton data of the target object in the target video image, and the motion data, to obtain the second bitstream data of the target video image.

18. The apparatus according to any one of claims 12 to 17, wherein a plurality of cameras are deployed in the target scene, and the target video is a video obtained by any one of the plurality of cameras by capturing the target scene; or
the target video is a video corresponding to the target object, and the video corresponding to the target object is obtained through video synthesis performed on videos captured by the plurality of cameras, and is used to record a moving process of the target object in the target scene.

19. A video playing apparatus, wherein the apparatus comprises:
a bitstream data obtaining module, configured to obtain second bitstream data of a target video image, wherein the second bitstream data comprises first bitstream data of the target video image and skeleton data of a target object in the target video image, the target video image is a frame of video image in a target video, the target video is obtained by capturing a target scene, and the target object is one of one or more moving objects comprised in the target scene;
a bitstream parsing module, configured to parse the second bitstream data to obtain the first bitstream data of the target video image and the skeleton data of the target object in the target video image; and
a first display module, configured to: display the target video image on a playing interface based on the first bitstream data, and display a mark box of the target object on the playing interface based on the skeleton data of the target object in the target video image.

20. The apparatus according to claim 19, wherein the second bitstream data further comprises motion data corresponding to the target video image, and the motion data is used to describe a motion status of the target object in the target scene obtained when the target video image is captured; and the apparatus further comprises:
a second display module, configured to display the motion data on the playing interface.

21. The apparatus according to claim 19, wherein the apparatus further comprises:
a motion data determining module, configured to determine, based on the skeleton data of the target object in the target video image, the motion data corresponding to the target video image, wherein the motion data is used to describe the motion status of the target object in the target scene obtained when the target video image is captured; and
a third display module, configured to display the motion data on the playing interface.

22. The apparatus according to any one of claims 19 to 21, wherein a plurality of cameras are deployed in the target scene, and a target video stream is a video stream obtained by any one of the plurality of cameras by capturing the target scene; or
a target video stream is a video stream corresponding to the target object, and the video stream corresponding to the target object is obtained through video synthesis performed on video streams captured by the plurality of cameras, and is used to record a moving process of the target object in the target scene.

23. A video analysis device, wherein the video analysis device comprises a memory and a processor;
the memory is configured to store a computer program, wherein the computer program comprises program instructions; and
the processor is configured to invoke the computer program to implement the video processing method according to any one of claims 1 to 7.

24. A video playing device, wherein the video playing device comprises a memory and a processor;
the memory is configured to store a computer program, wherein the computer program comprises program instructions; and
the processor is configured to invoke the computer program to implement the video playing method according to any one of claims 8 to 11.

25. A computer-readable storage medium, wherein the storage medium stores instructions, and when the instructions are run on a computer, the computer is enabled to perform steps of the method according to any one of claims 1 to 11.
